# EUROPEAN PATENT APPLICATION

(11) **EP 3 530 483 A1**
(43) Date of publication of application: **28.08.2019**
(21) Application number: 17862357.5
(22) Date of filing: 10.10.2017
(51) Int. Cl.: B60C 5/01, B60C 9/22, B29D 30/42

(54) **TIRE**

(30) Priority: 18.10.2016 JP 2016204374
(71) Applicant: Bridgestone Corporation, Tokyo 104-8340 (JP)
(72) Inventor: FUKUSHIMA, Atsushi, Tokyo 104-8340 (JP)
(74) Representative: Oxley, Robin John George
(86) International application number: PCT/JP2017/036664
(87) International publication number: WO 2018/074284

(57) **Abstract**

A tire has: a tire frame member having bead portions, side portions that lie in a row with tire radial direction outer sides of the bead portions, and a crown portion that lies in a row with tire axial direction inner sides of the side portions; and a belt layer in which a plurality of ring-shaped reinforcing bodies, which are annular and in which a reinforcing cord that is annular is covered by a resin, are disposed along a tire axial direction at a tire radial direction outer side of the tire frame member.

## Description

### Technical Field

The present invention relates to a tire.

### Background Art

Tires having belt layers in which reinforcing cords are wound in spiral forms in the tire peripheral direction have been manufactured conventionally. This belt layer is usually formed by belt-like rubber strips, which are formed by covering reinforcing cords with rubber, being wound on a tire case in spiral forms in the tire peripheral direction (see, for example, Japanese Patent Application Laid-Open (JP-A) No. 2008-168807).

### SUMMARY OF INVENTION

### Technical Problem

By the way, in a belt layer in which rubber strips, in which reinforcing cords are covered with rubber, are wound in spiral forms (a belt layer), because the rubber strips are inclined, although slightly, with respect to the tire peripheral direction, there is the possibility that ply steer will arise.

Further, at the starting point end portion and the ending point end portion of the winding of the rubber strip, steps arise between the end portions and the tire case. Moreover, the portions, at which the starting point end portions and the ending point end portions overlap one another in the tire peripheral direction, overlap locally, and effects arise in the weight balance.

The present invention was made in view of the above-described circumstances, and the subject thereof is the providing of a tire in which ply steer is reduced and the weight balance is improved.

### Solution to Problem

A tire of a first aspect of the present invention has: a tire frame member having bead portions, side portions that are arranged in a row with tire radial direction outer sides of the bead portions, and a crown portion that is arranged in a row with tire transverse direction inner sides of the side portions; and a belt layer in which a plurality of annular ring-shaped reinforcing bodies, each including an annular reinforcing cord covered by a resin, are disposed along a tire axial direction at a tire radial direction outer side of the tire frame member.

In the tire of the first aspect, the belt layer is formed by plural ring-shaped reinforcing bodies being disposed along the tire axial direction at the tire radial direction outer side of the tire frame member. These ring-shaped reinforcing bodies are annular and are endless, and therefore, one end portions and another end portions thereof do not overlap in the peripheral direction. Accordingly, the weight balance of the tire can be improved. Further, because the ring-shaped reinforcing bodies are not wound in spiral shapes and are not inclined with respect to the tire peripheral direction, ply steer can be reduced.

In a tire of a second aspect of the present invention, the reinforcing cord is formed in an annular shape by connecting both ends with a connecting member.

In the tire of the second aspect, the reinforcing cord can easily be formed in an annular shape by the both ends thereof being connected by the connecting member.

In a tire of a third aspect of the present invention, each of the ring-shaped reinforcing bodies is formed by covering a plurality of the reinforcing cords, which are disposed in the tire axial direction, with a resin.

In the tire of the third aspect, plural reinforcing cords are embedded in one ring-shaped reinforcing cord. Therefore, the width of the ring-shaped reinforcing cord in the tire transverse direction can be widened, and the number of ring-shaped reinforcing cords that are needed to form the belt layer can be made to be few, and manufacturing of the tire can be made easy.

A tire of a fourth aspect of the present invention has the feature that the tire frame member is made from a resin.

In the case of a tire frame member that is made from resin, when cords that are covered in a resin are wound in spiral forms, it is easy for the cords to be inclined. In the tire of the fourth aspect, because the ring-shaped reinforcing cords that are annular are used, inclining can be suppressed.

### Advantageous Effects of Invention

As described above, the present invention can improve the weight balance of the tire, and can reduce ply steer.

### BRIEF DESCRIPTION OF DRAWINGS

Fig. 1 is a cross-sectional view along a tire axial direction of a tire relating to a present embodiment.
Fig. 2A is a cross-sectional view along a tire peripheral direction of an ring-shaped reinforcing body that structures a belt layer relating to the present embodiment.
Fig. 2B is a cross-sectional view along line B-B of Fig. 2A of the ring-shaped reinforcing body that structures the belt layer relating to the present embodiment.
Fig. 2C is a cross-sectional view along line C-C of Fig. 2A of the ring-shaped reinforcing body that structures the belt layer relating to the present embodiment.
Fig. 3 is a plan view in which the belt layer relating to the present embodiment is partially broken.
Fig. 4 is a side view of a reinforcing cord that structures the belt layer relating to the present embodiment.
Fig. 5 is a perspective view in which the belt layer relating to the present embodiment is partially broken.
Fig. 6 is an explanatory drawing showing a portion of the process of manufacturing the tire relating to the present embodiment.
Fig. 7 is an explanatory drawing showing a portion of the process of manufacturing the tire relating to the present embodiment.
Fig. 8A is a perspective view of a pushing device that is used in manufacturing the tire relating to the present embodiment (with the amount of projection of a cylinder being small).
Fig. 8B is a perspective view of the pushing device that is used in manufacturing the tire relating to the present embodiment (with the amount of projection of the cylinder being large).
Fig. 9A is a cross-sectional view along the tire peripheral direction of an ring-shaped reinforcing body that structures the belt layer relating to a modified example of the present embodiment.
Fig. 9B is a cross-sectional view along line D-D of Fig. 9A of the ring-shaped reinforcing body that structures the belt layer relating to the modified example of the present embodiment.

### DESCRIPTION OF EMBODIMENTS

A form for embodying the present invention is described hereinafter on the basis of the drawings. In the drawings, the tire peripheral direction is denoted by arrow S, the tire axial direction (which may also be called the tire transverse direction) is denoted by arrow W, and the tire radial direction is denoted by arrow R. The tire axial direction means the direction parallel to the tire rotational axis.

Further, the side that is far, along the tire axial direction, from tire equatorial plane CL is described as the "tire axial direction outer side", and the side that is near, along the tire axial direction, to the tire equatorial plane CL is described as the "tire axial direction inner side". Moreover, the side that is far, along the tire radial direction, from the tire axis is called the "tire radial direction outer side", and the side that is near, along the tire radial direction, to the tire axis is called the "tire radial direction inner side".

The methods of measuring the dimensions of the respective portions are in accordance with the methods put forth in the 2016 YEAR BOOK issued by JATMA (Japan Automobile Tyre Manufacturer Association, Inc.). In cases in which TRA standards and ETRTO standards are applied at the regions of use or the regions of manufacturing, those respective standards are followed.

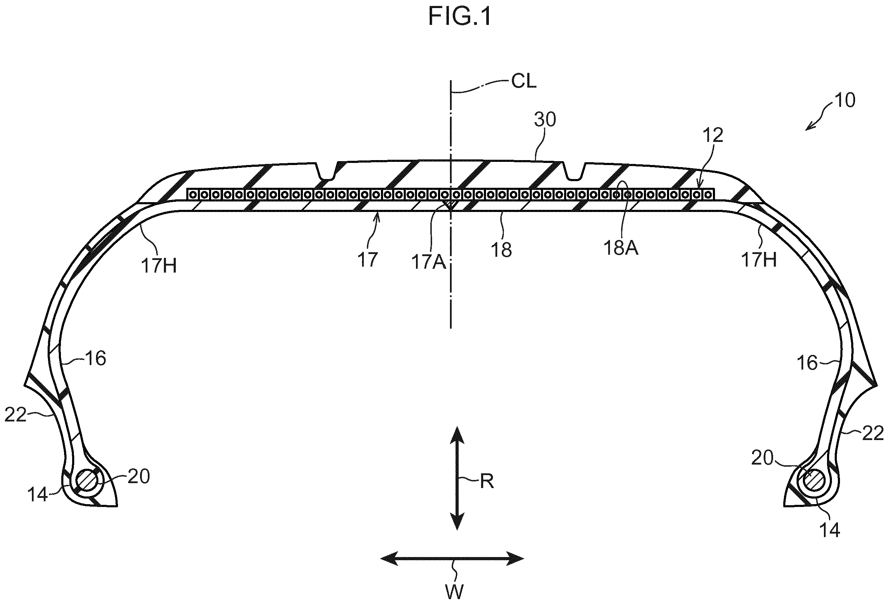

As shown in Fig. 1, a tire 10 relating to the present embodiment has a tire case 17 that is an example of an ring-shaped tire frame member, and a belt layer 12.

The tire case 17 is structured by using a resin material, and is formed in an annular shape in the tire peripheral direction. Further, the tire case 17 is structured to include a pair of bead portions 14 that are disposed with an interval therebetween in the tire axial direction, a pair of side portions 16 that respectively extend-out toward the tire radial direction outer side from this pair of bead portions 14, and a crown portion 18 that connects the pair of side portions 16. The bead portions 14 are the regions that contact the rims (not shown), and a covering layer 22 that is described later is provided on the surfaces thereof. The side portions 16 form the side portions of the tire 10, and are gently curved so as to become convex toward the tire axial direction outer sides from the bead portions 14 toward the crown portion 18.

The crown portion 18 is the region that connects the tire radial direction outer side end of one of the side portions 16 and the tire radial direction outer side end of the other of the side portions 16, and supports a tread 30 that is disposed at the tire radial direction outer side.

Further, in the present embodiment, the crown portion 18 is made to have a substantially uniform thickness. An outer peripheral surface 18A may be formed in a planar shape in a tire axial direction cross-section, or may be a curved shape that bulges out toward the tire radial direction outer side. Note that the outer peripheral surface 18A of the crown portion 18 of the present embodiment is the outer periphery of the tire case 17 at which the belt layer 12 is provided.

Further, the tire case 17 is formed by forming a pair of tire halves 17H, which are annular and have one of the bead portions 14, one of the side portions 16 and a half of the width of the crown portion 18, and setting these tire halves 17H so as to face one another, and joining the end portions of the respective half-width crown portions 18 together at the tire equatorial plane CL. These end portions are joined together by using, for example, a resin material 17A for welding.

A bead core 20, which is annular and extends along the tire peripheral direction, is embedded in the bead portion 14. This bead core 20 is structured by a bead cord. This bead cord is structured from a metal cord such as a steel cord or the like, or from an organic fiber cord, an organic fiber cord that is covered by a resin, or from a hard resin, or the like. Note that the bead core 20 itself may be omitted provided that the rigidity of the bead portion 14 can be sufficiently ensured.

Further, the covering layer 22, which is for improving the airtightness with the rim, is provided at, of the surface of the bead portion 14, at least the portion thereof that contacts the rim (not illustrated). This covering layer 22 is structured of a material such as a rubber material or the like that is softer than the tire case 17 and has good weather resistance.

Further, the covering layer 22 of the present embodiment is folded over from the inner surface at the tire axial direction inner side of the bead portion 14 to the tire axial direction outer side, and extends, via the outer side of the side portion 16, to a vicinity of the tire axial direction outer side end portion of the belt layer 12. Further, the extended end portion of the covering layer 22 is covered by the tread 30 that is described later. The covering layer 22 may be omitted provided that the sealability (airtightness) with the rim (not illustrated) can be ensured only by the bead portion 14 of the tire case 17.

Note that the tire case 17 may be an integrally molded part, or the tire case 17 may be formed by separately manufacturing three or more resin members and joining these together. For example, the tire case 17 may be formed by separately manufacturing the respective regions (e.g., the bead portions 14, the side portions 16, and the crown portion 18), and joining these together. The respective regions (e.g., the bead portions 14, the side portions 16, and the crown portion 18) of the tire case 17 may be formed of resin materials having different characteristics.

Reinforcing materials (fibers made of a polymer material or of a metal, cords, non-woven fabrics, woven fabrics, or the like) may be embedded and placed in the tire case 17.

The belt layer 12 is provided at the tire radial direction outer side of the tire case 17. The belt layer 12 is formed by plural ring-shaped reinforcing bodies 28 that are described later being disposed along the tire axial direction at the outer periphery of the tire case 17 (the outer peripheral surface 18A of the crown portion 18).

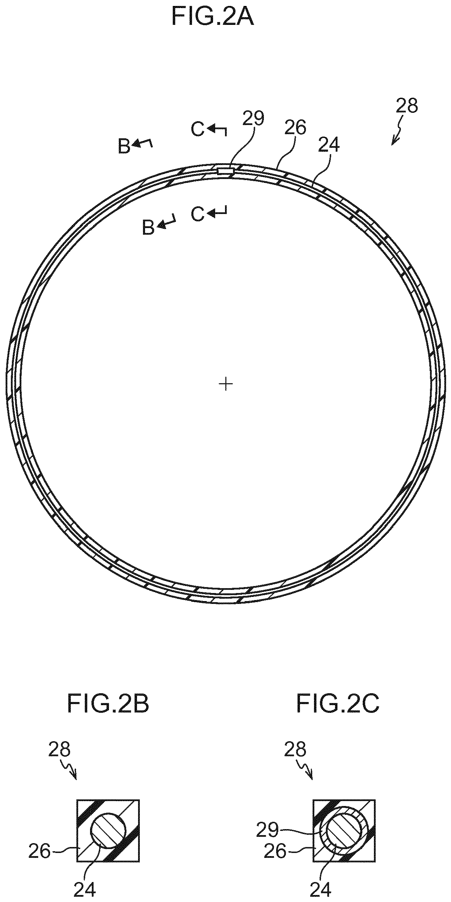

As shown in Fig. 2A, at the ring-shaped reinforcing body 28, a reinforcing cord 24 that is annular is covered by a resin 26, and the ring-shaped reinforcing body 28 is structured in an annular shape. As shown in Fig. 2B, the cross-section of the ring-shaped reinforcing body 28 is a quadrangular shape. In the present embodiment, at the ring-shaped reinforcing body 28, one reinforcing cord 24 is embedded within the resin 26.

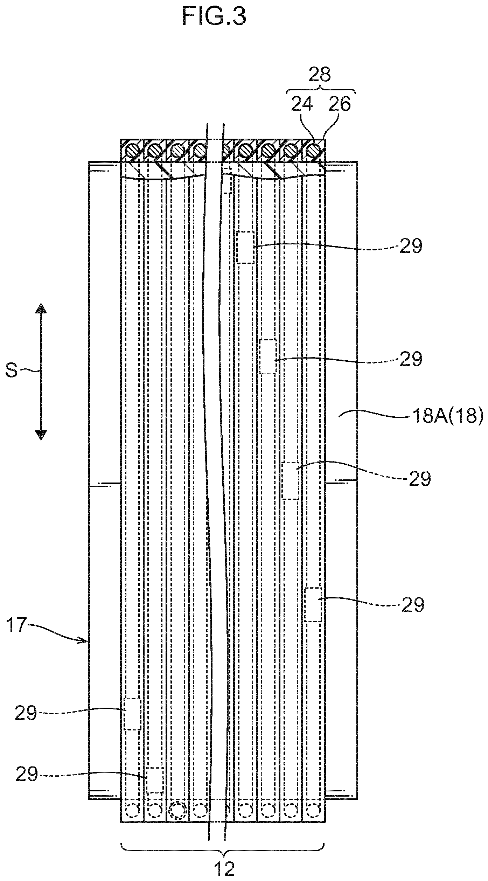

As shown in Fig. 3, the plural ring-shaped reinforcing bodies 28 are disposed at the outer peripheral surface 18A of the crown portion 18 along the tire peripheral direction, without being inclined with respect to the tire peripheral direction. At the ring-shaped reinforcing bodies 28 that are adjacent to one another, the resins 26 are welded together. Further, the resins 26 that are at the inner peripheral surfaces of the ring-shaped reinforcing bodies 28 are welded to the outer peripheral surface 18A of the crown portion 18.

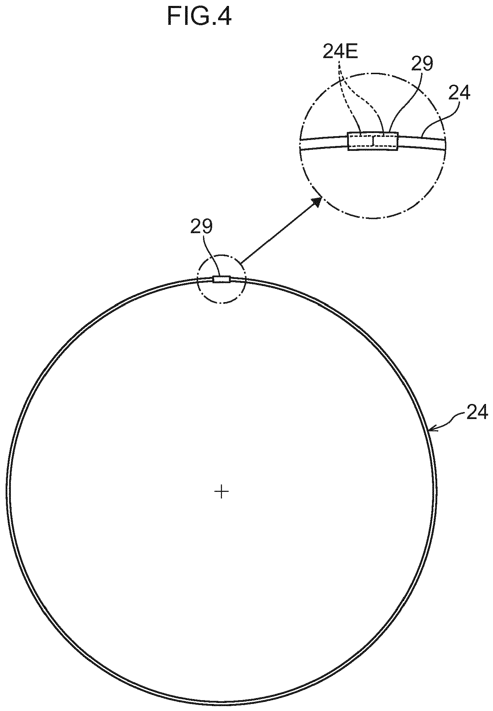

The reinforcing cord 24 is structured by a monofilament (single wire) of metal fibers or organic fibers or the like, or by a multifilament (twisted wire) in which these fibers are twisted. In the present embodiment, as shown in Fig. 4, the reinforcing cord 24 is formed in an annular shape due to both ends 24E of the reinforcing cord 24 being connected by a connecting member 29. The connecting member 29 is tubular, and is caulked from the outer side in a state in which one end and another end of the reinforcing cord 24 are inserted within the tube. The connecting member 29 can be formed of a metal. The positions, in the tire peripheral direction, of the connecting members 29 of the respective ring-shaped reinforcing bodies 28 that form the belt layer 12 are disposed so as to be offset so as to not overlap one another.

Note that the reinforcing cord 24 may be formed in an annular shape by the both ends thereof being joined by welding. Or, if the reinforcing cord 24 is a twisted wire, it may be formed by twisting filaments in annular shapes with the end portions of the respective filaments offset from one another.

Further, a surface treatment for adhesion that improves the adhesiveness with the resin 26 may be carried out on the filaments. This is a surface treatment of metal that is carried out in order to improve the adhesiveness with a thermoplastic material. An organic plating treatment, an immersion surface treatment, or the like can be used as the surface treatment for adhesion.

Organic plating treatments are disclosed in Japanese Patent Application Publication (JP-B) No. H05-51671, JP-ANo. 2001-1445, and the like.

The surface treatments disclosed in JP-A No. 2003-170531 and the like can be used as the immersion surface treatment. In this surface treatment, the bead cores 20 and the reinforcing cords 24 are immersed for a given time period in a water-soluble amine compound (or ammonium) aqueous solution. Hydrazine and derivatives thereof, lower amine compounds, pyridine, aniline, and the like can be used as the water-soluble amine compound here. Methylamine, dimethylamine, trimethylamine, ethylamine, diethylamine, triethylamine and the like can be suitably used as the lower amine.

As shown in Fig. 1, the tread 30 that is made of a rubber material is disposed at the tire radial direction outer side of the belt layer 12. The tread 30 covers the belt layer 12 and the tire case 17 from the tire radial direction outer side. The tread 30 contacts the road surface, and is structured of a rubber material having excellent wear resistance. Note that a cushion rubber, whose coefficient of elasticity is set to be lower than that of the rubber material of the tire radial direction outer side, may be included at the tire radial direction inner side of the tread 30.

A thermoplastic elastomer can be used as the resin material that is used at the tire case 17 and the resin 26 that covers the reinforcing cords 24 of the present embodiment. Further, the resin material is not limited to thermoplastic elastomers, and, in addition to thermoplastic resins and thermosetting resins and other general purpose resins, engineering plastics (including super engineering plastics) and the like can be used. Note that vulcanized rubber is not included among the resin materials here.

Thermoplastic resins (including thermoplastic elastomers) mean polymer compounds that, when there is a rise in temperature, the material softens and flows, and, when cooled, becomes a state of being relatively hard and having a given strength. Among these, the present specification makes the differentiation that polymer compounds, which have a rubber-like elasticity and which, when there is a rise in temperature, the material softens and flows, and, when cooled, becomes a state of being relatively hard and having a given strength, are thermoplastic elastomers, and polymer compounds, which do not have a rubber-like elasticity and which, when there is a rise in temperature, the material softens and flows, and, when cooled, becomes a state of being relatively hard and having a given strength, are thermoplastic resins that are not elastomers.

Examples of thermoplastic resins (including thermoplastic elastomers) are thermoplastic polyolefin elastomers (TPO), thermoplastic polystyrene elastomers (TPS), thermoplastic polyamide elastomers (TPA), thermoplastic polyurethane elastomers (TPU), thermoplastic polyester elastomers (TPC) and dynamic crosslinking thermoplastic elastomers (TPV), as well as thermoplastic polyolefin resins, thermoplastic polystyrene resins, thermoplastic polyamide resins, thermoplastic polyester resins, and the like.

Thermoplastic resins that, for example, have a deflection temperature under load (at the time of a load of 0.45 MPa) as prescribed by ISO 75-2 or ASTM D648 of 78°C or more, and have a tensile yield strength as prescribed by JIS K7113 of 10 MPa or more, and have a tensile elongation at break (JIS K7113) as similarly prescribed by JIS K7113 of 50% or more, and have a Vicat softening temperature (A method) as prescribed by JIS K7206 of 130°C can be used as the above-described thermoplastic material.

Thermoplastic resin means a polymer compound that, when there is a rise in temperature, forms a three-dimensional mesh structure and hardens, and examples thereof are phenol resins, epoxy resins, melamine resins, urea resins, and the like.

Note that, other than the above-listed thermoplastic resins (including thermoplastic elastomers) and thermosetting resins, general purpose resins such as (meth)acrylic resins, EVA resins, vinyl chloride resins, fluorine resins, silicone resins and the like may be used as the resin material.

### (Method of Manufacturing Tire)

A method of manufacturing the tire 10 of the present embodiment is described next. First, the tire half 17H that includes the bead core 20 is formed as a set by extrusion molding using a thermoplastic material. The covering layer 22 is formed on the outer surface of this tire half 17H.

On the other hand, the both ends 24E of the reinforcing cords 24 are inserted into the connecting members 29 and are caulked from the outer sides, and are formed into annular shapes. Then, after the necessary surface treatment is carried out thereon, the reinforcing cords 24 are set within an ring-shaped mold, and, by injection molding using the mold, the reinforcing cords 24 are covered with the resins 26, and the ring-shaped reinforcing bodies 28 that are annular are formed. Note that, in a case in which an adhesive layer is needed at the outer sides of the resins 26, a separate mold is further provided, and the ring-shaped reinforcing bodies 28 are set in this mold, and the adhesive layer can be formed by injecting an adhesive.

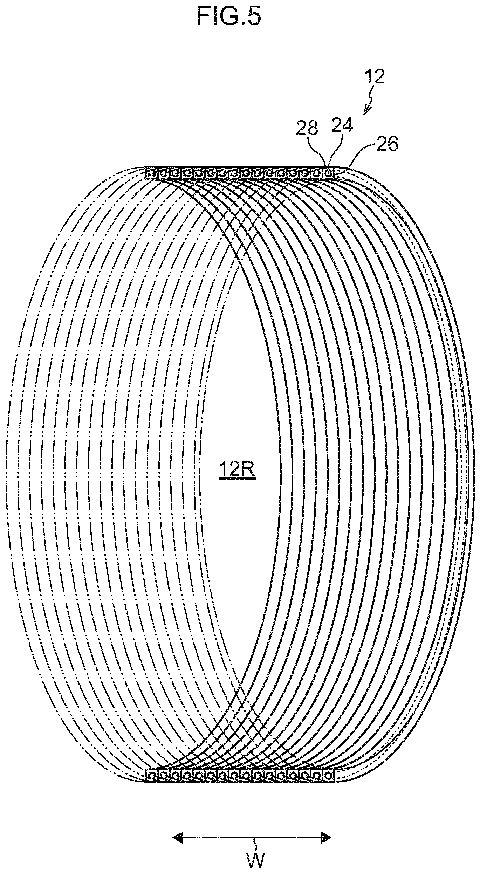

Next, as shown in Fig. 5, the needed number of the ring-shaped reinforcing bodies 28 is lined-up in the tire axial direction such that a continuous space R is structured by the respective inner peripheral surfaces of the ring-shaped reinforcing bodies 28, and the resins 26 at the side portions of the ring-shaped reinforcing bodies 28 are welded together. The belt layer 12 that is annular is thereby formed. Note that it is not absolutely necessary to weld the resins 26 at the side portions at the plural ring-shaped reinforcing bodies 28 together in this step, and the resins 26 do not have to be welded in this step.

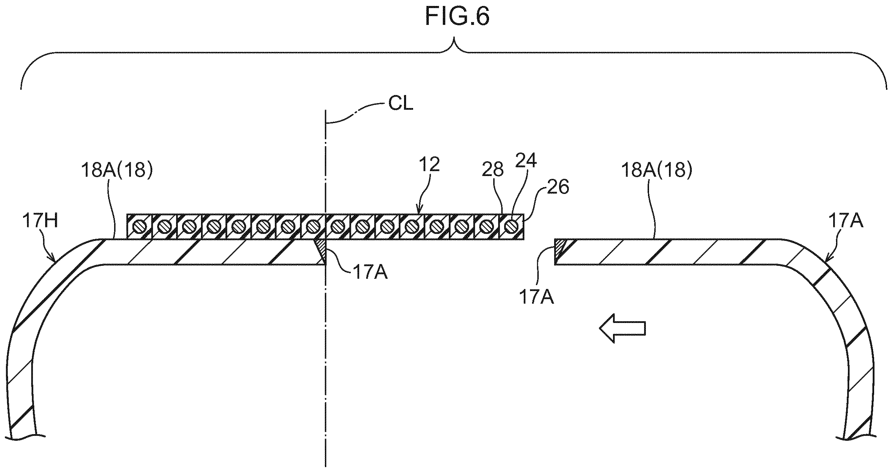

Next, the resins 26 at the inner periphery of the above-described belt layer 12 are heated and melted by an unillustrated heating device. Then, as shown in Fig. 6, the tire halves 17H that are annular are inserted from the tire axial direction both sides into the inner side of the belt layer 12, and the tire case 17 is formed by joining the tire halves 17H by using the resin material 17A for adhesion at the tire axial direction center of the belt layer 12.

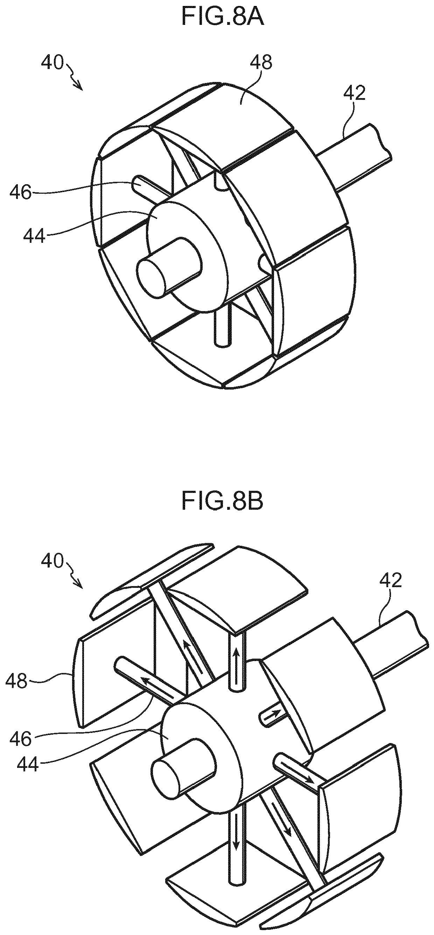

The above-described assembling can be carried out by using a pushing device 40. As shown in Fig. 8A and Fig. 8B, the pushing device 40 has a shaft 42 and a cylinder block 44 that is fixed to the shaft 42. Plural cylinder rods 46 that extend toward the radial direction outer side are provided at the cylinder block 44 at a uniform interval in the peripheral direction. A tire supporting piece 48, which has an arcuate curved surface whose outer surface is set to be substantially equal to the radius of curvature of the inner surface of the tire case 17, is provided at the distal end of the cylinder rod 46. Fig. 8A shows a state in which the amounts of projection of the cylinder rods 46 are smallest, and Fig. 8B shows a state in which the amounts of projection of the cylinder rods 46 are largest. Note that the cylinder rods 46 can be interlockingly projected out by the same amount in the same direction.

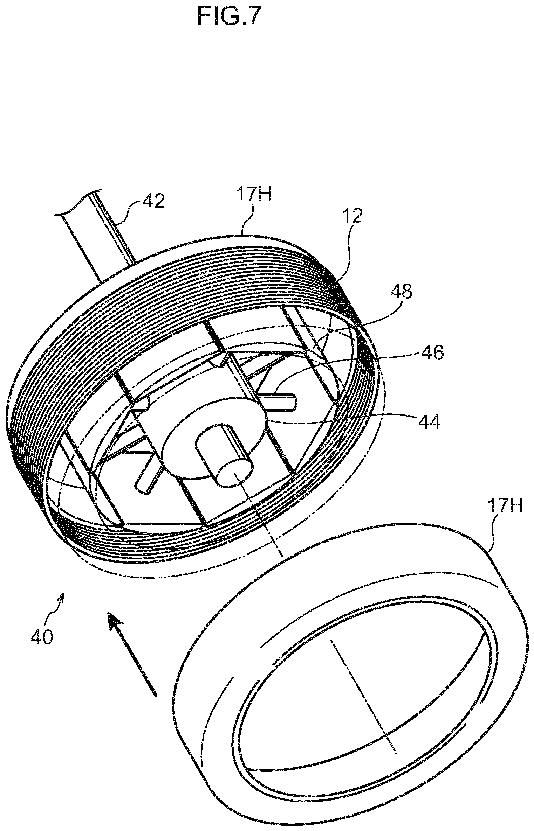

As shown in Fig. 7, the tire case 17 and the belt layer 12 are successively attached to the outer peripheries of the tire supporting pieces 48 in state in which the amounts of projection of the cylinder rods 46 are the smallest, and, after the attachment, the cylinder rods 41 are made to project-out (Fig. 8B). Due thereto, the crown portion 18 of the tire case 17 is pushed toward the inner peripheral surface of the belt layer 12, and the resins 26 of the belt layer 12 that are in molten states and the outer peripheral surface 18A of the crown portion 18 are welded.

Thereafter, by providing the unvulcanized tread 30 at the tire radial direction outer side of the tire case 17 and the belt layer 12 and going through a vulcanization step, the tire 10 is completed, although details thereof are omitted.

At the tire 10 of the present embodiment, the belt layer 12 is structured by the plural ring-shaped reinforcing bodies 28, in which the reinforcing cords 24 that are annular are covered, being disposed along the tire axial direction. These ring-shaped reinforcing bodies 28 are annular and are endless, and therefore, one end portions and another end portions thereof do not overlap in the peripheral direction as is the case with cords having ends. Accordingly, the weight balance of the tire 10 can be improved. Further, because there are no steps between the end portions and the crown portion as is the case with cords having ends, at the time when layers for reinforcing and the like are disposed along the tire axial direction outer side surfaces of the belt layer, it is difficult for gaps to form. Further, because the ring-shaped reinforcing bodies 28 are not wound in spiral shapes and are not inclined with respect to the tire peripheral direction, ply steer of the tire 10 can be reduced.

Further, in a case in which a belt layer is formed by winding cords in spiral forms in the tire peripheral direction, the resin that covers the cords is inclined with respect to the outer side surface 18A of the crown portion 18, and there are rare cases in which steps arise between the cords. However, it is difficult for such steps to arise in a case in which the ring-shaped reinforcing bodies 28 that are annular are lined-up.

Further, by connecting the both ends of the reinforcing cord 24 of the belt layer 12 by the connecting member 29 as in the present embodiment, the reinforcing cord 24 that is annular can be formed easily.

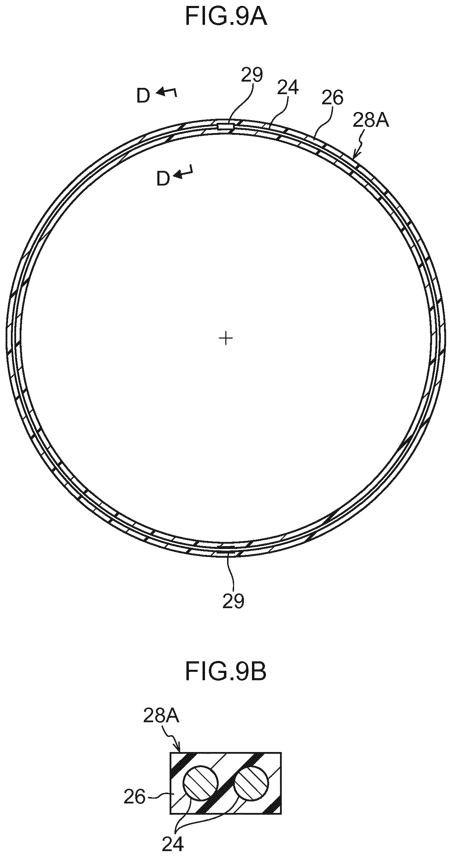

Note that the present embodiment describes an example in which, at one of the ring-shaped reinforcing bodies 28, the one reinforcing cord 24 is embedded in the resin 26. However, plural reinforcing cords 24 may be embedded within the one ring-shaped reinforcing body 28. An example in which two of the reinforcing cords 24 are embedded is shown in Fig. 9A and Fig. 9B. The connecting members 29, which make the reinforcing cords 24 into annular shapes, are disposed are different positions in the tire peripheral direction.

Further, although the present embodiment describes an example in which the tire case 17 is formed of a resin other than rubber, the belt layer 12 may be applied to a structure in which the tire case (the bead portions, the side portions and the crown portion) is formed of rubber.

Although forms for embodying the present invention have been described above by using embodiments as examples, these embodiments are examples, and the present invention can be embodied by being changed in various ways within a scope that does not depart from the gist thereof, and the order of the manufacturing steps can be changed appropriately. Further, it goes without saying that the scope of the right of the present invention is not limited to these embodiments.

Note that the disclosure of Japanese Patent Application No. 2016-204374 is, in its entirety, incorporated by reference into the present specification.
All publications, patent applications, and technical standards mentioned in the present specification are incorporated by reference into the present specification to the same extent as if such individual publication, patent application, or technical standard was specifically and individually indicated to be incorporated by reference.

## Claims

1. A tire, comprising:
a tire frame member having bead portions, side portions that are arranged in a row with tire radial direction outer sides of the bead portions, and a crown portion that is arranged in a row with tire transverse direction inner sides of the side portions; and
a belt layer in which a plurality of annular ring-shaped reinforcing bodies, each including an annular reinforcing cord covered by a resin, are disposed along a tire axial direction at a tire radial direction outer side of the tire frame member.

2. The tire of claim 1, wherein the reinforcing cord is formed in an annular shape by connecting both ends with a connecting member.

3. The tire of claim 1 or claim 2, wherein each of the ring-shaped reinforcing bodies is formed by covering a plurality of the reinforcing cords, which are disposed in the tire axial direction, with a resin.

4. The tire of any one of claim 1 through claim 3, wherein the tire frame member is made from a resin.
